# EUROPÄISCHE PATENTSCHRIFT

(11) **EP 2 680 959 B1**
(45) Veröffentlichungstag und Bekanntmachung des Hinweises auf die Patenterteilung: **27.07.2016**
(21) Anmeldenummer: 12708750.0
(22) Anmeldetag: 27.01.2012
(51) Int. Cl.: B01F 5/06, B01F 7/00, B01F 13/00, B01F 13/10, A61C 9/00, B05C 17/005, B01F 15/00

(54) **DYNAMISCHER MISCHER UND DESSEN VERWENDUNG**
DYNAMIC MIXER AND USE THEREOF
MÉLANGEUR DYNAMIQUE ET SON UTILISATION

(30) Priorität: 28.02.2011 EP 11156134
(43) Veröffentlichungstag der Anmeldung: 08.01.2014
(73) Patentinhaber: Sulzer Mixpac AG, 9469 Haag (CH)
(72) Erfinder: LINNE, Volker, 35119 Rosenthal-Roda (DE); HIEMER, Andreas, CH-9445 Rebstein (CH); HÜSLER, Florian, CH-6300 Zug (CH)
(74) Vertreter: Manitz, Finsterwald & Partner GbR
(86) Internationale Anmeldenummer: PCT/EP2012/051376
(87) Internationale Veröffentlichungsnummer: WO 2012/116863

(56) Entgegenhaltungen:
- EP-A1- 1 099 470
- WO-A1-2004/080611
- WO-A1-2007/041878
- DE-A1- 10 242 100
- DE-A1-102007 059 078
- DE-A1-102008 008 964
- US-A1- 2009 207 685
- US-A1- 2010 208 544

## Beschreibung

Die Erfindung betrifft einen dynamischen Mischer und dessen Verwendung. Ein derartiger dynamischer Mischer wird vorteilhafterweise eingesetzt, um eine Mehrzahl von Komponenten, die von einer Mehrkomponentenkartusche bereitgestellt werden, zu mischen.

Aus der WO 2007/041878 ist ein dynamischer Mischer zum Mischen von Komponenten mit unterschiedlichen Volumenanteilen bekannt, insbesondere zur Herstellung von Abformmassen für dentale Abdrücke. Im Innenraum des Mischergehäuses ist eine Vorkammer angeordnet, innerhalb welcher der Mischrotor einen Verteilerkörper zum Verteilen der Komponenten um seine Rotationsachse aufweist, um dadurch ein richtiges Mischungsverhältnis zwischen den Komponenten zu erzielen und um Lufteinschlüsse zu vermeiden. Anschliessend gelangen die vorgemischten Komponenten zu ihrem vollständigen Durchmischen durch mindestens eine Durchtrittsöffnung in eine Hauptkammer.

Insbesondere bei hohen Mischungsverhältnissen von viskosen bzw. pastösen Komponenten ist es besonders schwierig das richtige Mischungsverhältnis konstant und eine gute Vermischung zu erhalten. Die Vermischung erfolgt im Allgemeinen durch Scherkräfte, wobei die Komponenten durch den Mischer gedrückt werden. Der Mischer weist ein Gehäuse und ein Rotorelement auf, welches in dem Gehäuse drehbar angeordnet ist, wobei das Gehäuse je eine Einlassöffnung für zumindest zwei Komponenten und mindestens eine Auslassöffnung aufweist. Zwischen dem Rotorelement und dem Gehäuse ist ein ringförmiger Zwischenraum vorgesehen, in welchem ein an dem Rotorelement angebrachtes Mischelement angeordnet ist.

Das Rotorelement besteht aus dem Rumpfelement und dem Mischelement. Dieses Mischelement ist als Flügelelement ausgebildet, welches vom

Rumpfelement weg in den Zwischenraum ragt. Vorzugsweise ist eine Mehrzahl derartiger Flügelelemente vorhanden. Zusätzlich können auch statische Mischelemente von der Innenwand des Gehäuses in den Zwischenraum hineinragen, was herstelltechnisch jedoch nur schwer realisierbar ist. Die Komponenten werden durch das oder die Flügelelemente sowie die eventuell zusätzlich vorgesehenen statischen Mischelemente mehrfach in einer knetenden Art und Weise umgelagert.

Des Weiteren ist es aus WO2007/041878 bekannt, den Zwischenraum in eine Vorkammer und eine Hauptkammer zu unterteilen. Die Vorkammer dient dazu, die Förderung einer Komponente A im Vergleich zu einer Komponente B zu verzögern, so dass die Komponente A die Hauptkammer später als die Komponente B erreicht. Hierdurch wird sichergestellt, dass der erste Anteil der Mischung dem gewünschten Mischungsverhältnis entspricht. Ein mit dem Rotorelement verbundener Verteilerkörper wird verwendet, um eine luftblasenfreie Füllung der Vorkammer mit der Komponente A sowie deren Verteilung sicherzustellen. Weil der Verteilerkörper mit dem Rotorelement mitbewegt wird, bleibt der Flüssigkeitswiderstand und demzufolge der Druckverlust niedrig. Des Weiteren ist sichergestellt, dass die kleinstmögliche Distanz zwischen der Einlassöffnung und der Vorlaufkammer eingehalten wird, so das der Flüssigkeitswiderstand gering bleiben kann. Nachteilig ist hingegen, dass die beiden Komponenten im Wesentlichen unvermischt in die Hauptkammer gelangen.

Ziel ist es, eine möglichst grosse Phasengrenzfläche zwischen den Komponenten zu erzeugen, indem durch Aufteilung und Umlagerung der strömenden Komponenten viele und möglichst feine Schichten erzeugt werden, um eine Mischwirkung zu erzielen. Hierzu wurden bisher nach der Vorkammer, in welcher die Komponenten erstmals zusammengeführt wurden, die Komponenten in die Hauptkammer geleitet. In der Hauptkammer werden die Fluidmassenströme mit am Rotorelement angebrachten Mischelementen als Folge der Bewegung des Rotorelements quer zur Hauptströmungsrichtung aufgeteilt und ein Teil der Füllmasse mehrheitlich entgegen der Hauptströmungsrichtung weggedrängt. Folglich kann die Füllmasse hinter dem Mischelement nachströmen und derart eine Umlagerung und Schichtenbildung der Komponenten in der Füllmasse erzielt werden. Schwierigere Mischaufgaben führen zu längeren Mischern, größerem Kraftaufwand und somit erhöhtem Energieverbrauch für den Mischerantrieb und größerem Widerstand, um die Komponenten durch den Mischer zu drücken.

Daher musste man bisher mit folgenden nachteiligen Konsequenzen zurechtkommen: einem längeren Mischer, einem erhöhten Energieverbrauch sowie auch einem erhöhten Druckverlust. Demzufolge müssen größere und schwerere Antriebsaggregate und Batterien für das Austragsgerät vorgesehen werden, was die Handhabung für die Applikation des Gemisches einschränkt, den Energiebedarf erhöht und im Falle von Batteriebetrieb, die Einsatzzeiten des Austragsgeräts reduziert.

Da bei einer Unterbrechung des Austrags die Komponenten im Mischer miteinander reagieren und aushärten, muss der Mischer nach Gebrauch und zusammen mit den darin enthaltenen Komponenten ersetzt und entsorgt werden.

Die EP 1 099 470 A1 betrifft eine Vorrichtung zum Vermischen zweier pastöser Massen, bei welcher an einem Gehäuse zwei Einlassöffnungen an einem Ende und eine Auslassöffnung an einem gegenüberliegenden Ende zum Zuführen der zu vermischenden Komponenten bzw. zum Abführen der vermischten Komponenten vorgesehen sind. Das Gehäuse weist einen rohrförmigen Abschnitt auf, in dem ein Mischerelement zum Vermischen der zu vermischenden Komponenten ausgebildet ist. An den rohrförmigen Abschnitt schließt sich ein Ankopplungsabschnitt mit zwei Ankopplungsöffnungen an. Die Ankopplungsöffnungen sind über einen ersten bzw. über einen zweiten Kanal mit den Einlassöffnungen verbunden. Der der erste oder der zweite Kanal oder beide Kanäle erstrecken sich bis zu den Die Einlassöffnungen sind räumlich voneinander getrennt. Auch sind der erste oder die ersten vom zweiten oder von dem zweiten Kanal getrennt, so dass ein Kontakt der zu vermischenden Komponenten erst im Bereich des rohrförmigen Abschnitts mit dem Mischelement erfolgt.

Die WO 2004/080611 A1 betrifft eine Austragungs- und Mischspitze für eine Mehrzahl von zu vermischenden Komponenten. In einem Gehäuse ist dabei ein Stator in einem Bereich vorgesehen, welchem über eine Mehrzahl von Zuführkanälen aus einem Vorratsgefäß die zu vermischenden Komponenten zugeführt werden, um diese dann nach dem Durchmischen über Austrittskanäle auszugeben.

Aufgabe der Erfindung ist daher, für schwierige Mischaufgaben einen Mischer zu finden, welcher kurz ist und mit möglichst wenig Energieaufwand für das Rotorelement sowie einem kleineren Druckverlust verglichen mit dem Stand der Technik auskommt. Die Mischer werden in hohen Stückzahlen produziert. Mit kleinen Mischern lassen sich Werkstoff für den Mischer, für die Komponenten wie auch Kosten für die Entsorgung der gebrauchten Mischer einsparen.

Die der Erfindung zu Grunde liegende Aufgabe wird bei einem dynamischen Mischer erfindungsgemäß mit den Merkmalen des unabhängigen Patentanspruchs 1 sowie bei einer Verwendung des dynamischen Mischers erfindungsgemäß mit den Merkmalen des unabhängigen Patentanspruchs 11 gelöst. Bevorzugte Ausführungsformen des dynamischen Mischers sind Gegenstand der abhängigen Ansprüche.

Die Verwendung des dynamischen Mischers erfolgt bevorzugt für viskose oder zähflüssige Zweikomponentensysteme wie beispielsweise für Abdichtungen, Klebeverbindungen, Abformmassen, in autonomen Hand-Austragsgeräten oder in stationären Tischgeräten.

Wenn in einem ersten erfindungsgemäßen Vorvermischungsschritt die Komponenten räumlich gleichmässig, auch wenn nicht vermischt, verteilt sind, so ist es möglich eine gute Vermischung durch feinräumiges Vermischen mit viel weniger Energieaufwand im Vergleich zu vorbekannten Lösungen zu erreichen. Es hat sich auch gezeigt, dass für eine geforderte Mischwirkung die Verweilzeit der Komponenten im dynamischen Mischer verkleinert werden kann und somit insgesamt der dynamische Mischer kompakter und mit weniger Inhalt gebaut werden kann.

Nachfolgend wird die Erfindung anhand der Zeichnungen erläutert. Es zeigen:
- Fig. 1a: einen Schnitt durch einen dynamischen Mischer gemäß eines ersten Ausführungsbeispiels der Erfindung entlang der Rotorachse,
- Fig. 1b: einen Schnitt durch den dynamischen Mischer nach Fig. 1 durch die ersteVorkammer,
- Fig. 1c: einen Schnitt durch den dynamischen Mischer nach Fig. 1 durch die zweite Vorkammer,
- Fig. 2a: einen Schnitt durch einen dynamischen Mischer gemäß eines zweiten Ausführungsbeispiels der Erfindung,
- Fig. 2b: einen Schnitt durch den dynamischen Mischer nach Fig. 2a durch die ersteVorkammer,
- Fig. 2c: einen Schnitt durch den dynamischen Mischer nach Fig. 2a durch die zweite Vorkammer,
- Fig. 2d: einen Schnitt durch den dynamischen Mischer nach Fig. 2a durch die Hauptkammer,
- Fig. 3: eine Ansicht eines Rotorelements für einen dynamischen Mischer.

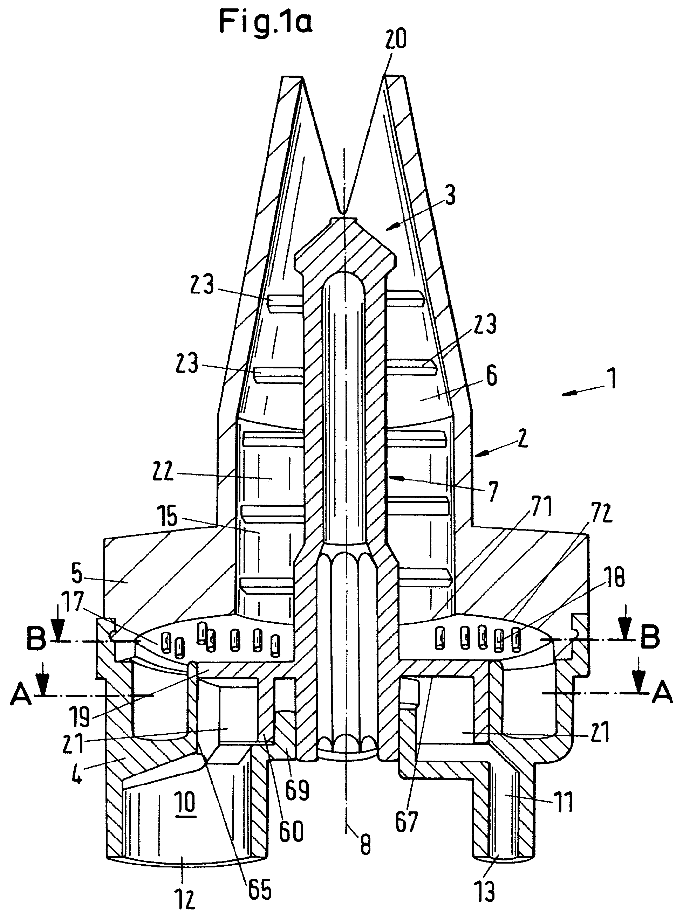

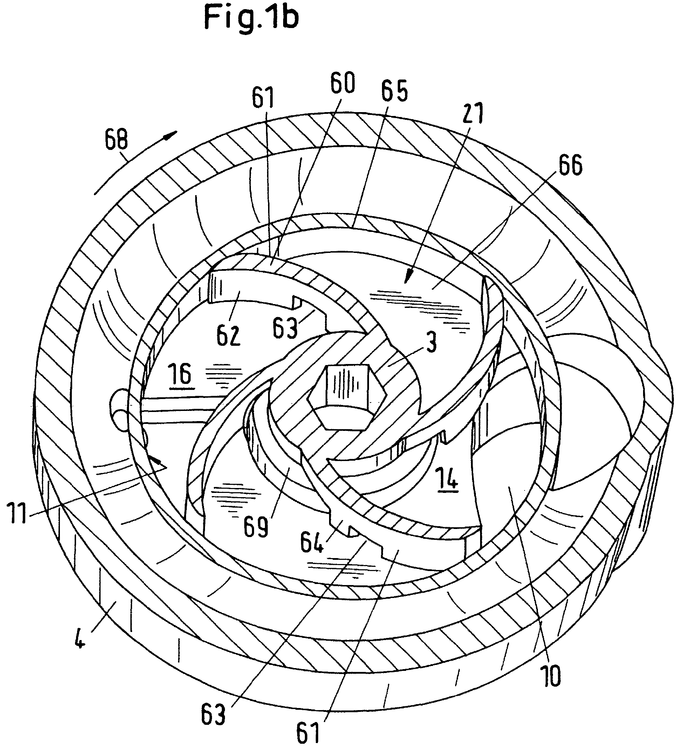

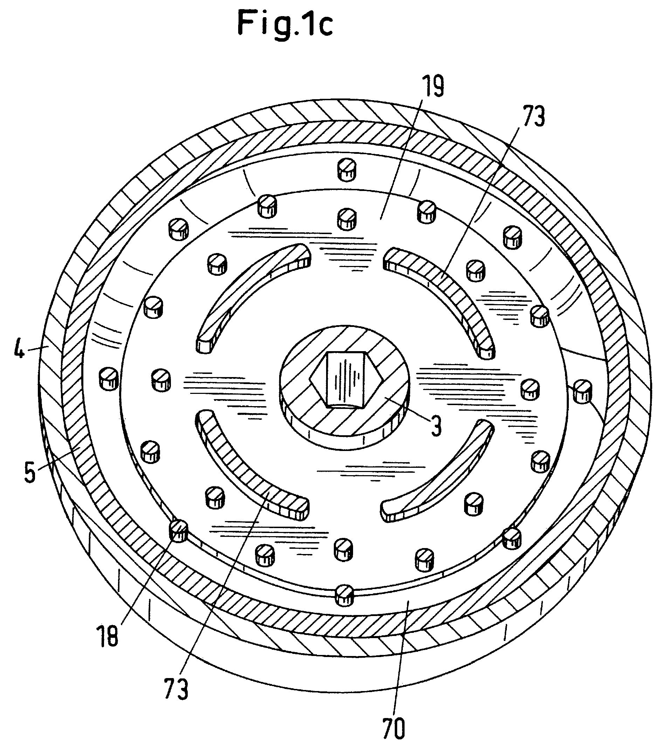

Fig. 1a zeigt einen dynamischen Mischer für eine Mehrzahl von fluiden Komponenten. Der dynamische Mischer 1 weist ein Gehäuse 2 und ein Rotorelement 3 auf, welches in dem Gehäuse 2 drehbar um eine Rotorachse 8 angeordnet ist. In der vorliegenden Ausführungsform ist das Gehäuse zweiteilig aufgebaut, es enthält einen ersten Gehäuseteil 4, in welchem sich der Zulauf der Komponenten befindet und einen zweiten Gehäuseteil 5, welcher zur Erzeugung einer Mischung aus der Mehrzahl von fluiden Komponenten dient. Der erste Gehäuseteil 4 wird mit dem zweiten Gehäuseteil 5 über eine Rastverbindung, Schnappverbindung oder eine Schweissverbindung verbunden, sobald das Rotorelement 3 in dem zweiten Gehäuseteil 5 aufgenommen ist. Der erste Gehäuseteil 4 weist eine Einlassöffnung 12, 13 für zumindest je eine Komponente auf. Die Einlassöffnungen 12, 13 können unterschiedlichen Durchmesser aufweisen, der vom gewünschten Mischungsverhältnis der Komponenten abhängig ist. Die Einlassöffnungen münden in korrespondierende Einlasskanäle 10, 11, die im ersten Gehäuseteil 4 angeordnet sind. Die Einlasskanäle 10, 11 münden in die erste Vorkammer 21, die mit in Fig. 1 nicht dargestellten Austrittsöffnungen versehen ist, welche in einen Innenraum 15 des zweiten Gehäuseteils 5 münden.

Der zweite Gehäuseteil 5 weist mindestens eine Auslassöffnung 20 auf. Durch die Auslassöffnung 20 verlässt das Gemisch der Komponenten den dynamischen Mischer. Die Auslassöffnung 20 kann entsprechend der vorgesehenen Anwendung speziell ausgestaltet sein. In dem vorliegenden Fall ist ein v-förmiger Einschnitt vorgesehen. Mit Hilfe dieses v-förmigen Einschnitts ergibt beim Austragen der Füllmasse die Form einer Dreiecksraupe. Der Innenraum 15 des zweiten Gehäuseteils 5 dient zur Aufnahme des Rotorelements 3. Der Innenraum 15 wird von der Innenwand 6 des zweiten Gehäuseteils 5 begrenzt. Der Innenraum 15 ist zumindest an den Stellen, an welchen sich das Rotorelement 3 befindet, als ringförmiger Zwischenraum ausgebildet.

Der Innenraum 15 weist eine zweite Vorkammer 17 und eine Hauptkammer 22 auf. Die Komponenten werden von der zweiten Vorkammer 17 zu der Hauptkammer 22 geleitet. In der zweiten Vorkammer 17 kann bereits eine Vorvermischung erfolgen. Hierzu ist in der zweiten Vorkammer eine Mehrzahl von Mischelementen 18 angeordnet. Diese Mischelemente sind beispielsweise wie hier dargestellt als Stiftelemente ausgeführt, welche in die zweite Vorkammer 17 hineinragen. Die Stiftelemente können auf einer Drehfläche 19 des Rotorelements 3 angeordnet sein und / oder von der Innenwand des Gehäuses, welche die Vorkammer begrenzt, in die Vorkammer 17 hineinragen. Durch die Drehfläche 19 und die Stiftelemente 18 werden Scherkräfte auf die Komponenten ausgeübt.

Alternativ kann über der Drehfläche 19 ein ortsfestes Scheibenelement angeordnet sein, welches allenfalls Stiftelemente aufweisen kann. In dem Scheibenelement kann zumindest eine Austrittsöffnung zum Durchtritt der Komponenten in die zweite Vorkammer angeordnet sein. Das Scheibenelement kann zwischen dem ersten und zweiten Gehäuseteil eingespannt sein.

Zwischen dem Rotorelement 3 und der Innenwand 6 des Gehäuses ist ein ringförmiger Zwischenraum vorgesehen, in welchem ein mit dem Rotorelement 3 verbundenes Mischelement 7 angeordnet ist.

Das Mischelement 7 umfasst in der Hauptkammer 22 eine Mehrzahl von Flügelelementen 23. Die Flügelelemente 23 ragen als Vorsprünge in den Innenraum 15, welcher die Hauptkammer 22 bildet. In dieser Hauptkammer 22 erfolgt die Durchmischung der Komponenten, indem die Komponenten von den Flügelelementen erfasst werden und umgelagert werden. Zumindest ein Teil der Flügelelemente kann als Leitelement zur Förderung der Komponenten durch den Innenraum 15 in Richtung der Auslassöffnung 20 ausgebildet sein.

Das Rotorelement ist zumindest teilweise als Hohlkörper ausgebildet. Der zentrale Hohlraum des Rotorelements dient zur Aufnahme einer Antriebswelle. Vorteilhafterweise hat der Hohlraum eine zumindest dreieckige Form, so das eine Antriebswelle mit dem Rotorelement verdrehfest verbindbar ist, so das das Rotorelement über die Antriebswelle angetrieben werden kann.

Der dynamische Mischer enthält demnach mindestens zwei Vorkammern. Die erste Vorkammer 21 wird zum Einbringen der Komponenten verwendet, wobei eine grobe Vorvermischung in der ersten Vorkammer erreicht werden kann. Die zweite Vorkammer 17 dient zum Erreichen einer kleinräumigen Vermischung. Die erste Vorkammer 21 wird derart ausgelegt, dass zwei oder mehr Komponenten derart in die erste Vorkammer 21 eingebracht werden, dass die Komponente mit den kleineren Volumenstrom in den Volumenstrom der Komponente mit dem größeren Volumenstrom eingeführt wird. Die erste Vorkammer 21 ist durch eine Drehfläche 19, insbesondere eine Abdeckplatte, die am Rotorelement 3 angeordnet sein kann, von der zweiten Vorkammer 17 getrennt. In der ersten Vorkammer 21 wird mittels einem am Rotorelement 3 und allenfalls am Gehäuse oder einem separatem Stator angebrachten Flügelelement die eine Komponente von dem Eintrittskanal 11 weg zu der Austrittsöffnung des Eintrittskanals 10 der anderen Komponente geführt, wodurch mindestens eine erste Verteilung der Komponenten und/oder allenfalls eine erste Vorvermischung der Komponenten zu einer Füllmasse erreicht wird. Die vorvermischten Komponenten gelangen von der ersten Vorkammer 21 über einen äusseren Ringspalt, welcher durch das Mischergehäuse und der Abdeckplatte gebildet ist, in die zweite Vorkammer 17. In der zweiten Vorkammer 17 bewegen sich die vorvermischten Komponenten radial zur Rotorachse 8 und werden über kleine Hindernisse, wie beispielsweise Stiftelemente kleinräumig mit wenig Kraftaufwand weiter gemischt. Die Füllmasse wird von der zweiten Vorkammer 17 in die Hauptkammer 22 geleitet. Nach einer axialen Umlenkung im Übergangsbereich zwischen der zweiten Vorkammer 17 und Hauptkammer 22 gelangt die Füllmasse zur zentral gelegten Auslassöffnung 20. In der Hauptkammer 22 erfolgt eine vollständige Vermischung unter Verwendung von weiteren Flügelelementen oder statischen Mischelementen.

Die erste Vorkammer 21 ist in Fig. 1b in einem Schnitt durch den dynamischen Mischer im Bereich des ersten Gehäuseteils 4 sichtbar. Die Lage des Schnitts ist in Fig. 1a mit A-A angegeben. Die Schnittebene ist normal zur Rotorachse gelegt und verläuft durch die erste Vorkammer. Die beiden Einlasskanäle 10, 11 münden in die erste Vorkammer 21. In der ersten Vorkammer befindet sich ein Armelement 60, welches mit dem Rotorelement 3 verbunden ist. Selbstverständlich kann eine Mehrzahl derartiger Armelemente 60 vorgesehen sein, in Fig. 1 b sind vier gleichartige Armelemente gezeigt.

Das Armelement 60 erstreckt sich durch die erste Vorkammer 21 vom Rotorelement 3 bis zu der Innenwand 65 des ersten Gehäuseteils 4, welcher die erste Vorkammer begrenzt. Das Armelement 60 weist eine Frontseite 61 auf, mittels welcher die Füllmasse durch die erste Vorkammer 21 verschoben wird und eine gegenüberliegende Rückseite 62. Die Rückseite 62 weist eine konkave Krümmung auf, die Frontseite 61 hat eine konvexe Krümmung. Vorteilhafterweise sind die Krümmungsradien der Krümmungen der Rückseite und der Frontseite im Wesentlichen gleich. Das Armelement 60 erstreckt sich vom Boden 66 bis zur Decke 67 der Vorkammer 21. Die Decke 67 ist nur in Fig. 1 a an der Drehfläche 19 sichtbar. In dem Armelement 60 kann eine Ausnehmung 63 vorgesehen sein, wenn ein Teil der Füllmasse von der Frontseite 61 auf die Rückseite 62 entweichen soll.

Des Weiteren weist das Armelement 60 eine Führungsausnehmung 64 auf. Mittels der Führungsausnehmung 64 gleitet das Armelement auf einem Vorsprung 69 des ersten Gehäuseteils. Das Rotorelement wird auch durch den Vorsprung im dynamischen Mischer gehalten.

Fig. 1c zeigt einen Schnitt durch die zweite Vorkammer 17. Dieser Schnitt durch den dynamischen Mischer ist im Bereich der Verbindung zwischen dem ersten Gehäuseteil 4 und dem zweiten Gehäuseteil 5 gelegt. Die Lage des Schnitts ist in Fig. 1a mit B-B angegeben. Die Schnittebene ist normal zur Rotorachse 8 gelegt. Die Drehfläche 19 bildet den Boden der zweiten Vorkammer 17 aus. Die Füllmasse tritt durch einen Ringspalt 70 in die zweite Vorkammer ein und verlässt die zweite Vorkammer über eine ringförmige Auslassöffnung 71, die nur in Fig. 1a sichtbar ist. In der zweiten Vorkammer befindet sich eine Mehrzahl von Stiftelementen 18. Die Stiftelemente 18 ragen von der Decke 72 in die zweite Vorkammer 17 hinein. Die Füllmasse wird durch Scherkräfte, welche durch die Drehfläche 19 eingebracht werden, zumindest teilweise in eine Rotationsbewegung gedrängt. Wenn die Füllmasse eines der Stiftelemente erreicht, teilt sie sich in zwei Teilströme, wodurch eine Umlagerung und eine Vorvermischung der Komponenten der Füllmasse mit minimalem Kraftaufwand erfolgen. Zusätzlich können Wandelementabschnitte 73 vorgesehen sein. Diese Wandelementabschnitte 73 sind im Wesentlichen um die Auslassöffnung 71 (siehe Fig. 1a) angeordnet und erzwingen ein gleichmässiges Durchströmen der zweiten Vorkammer vor dem Eintritt in die Hauptkammer. Die Wandelementabschnitte 73 ragen von der Decke 72 in die Vorkammer 17. Die Wandelementabschnitte 73 sind als Zylindersegmente ausgestaltet. Der Innendurchmesser der Zylindersegmente entspricht im Wesentlichen dem Innendurchmesser der Auslassöffnung 71, beziehungsweise dem vom zweiten Gehäuseteil 5 gebildeten Innendurchmesser der Hauptkammer 22 an dessen Eintritt.

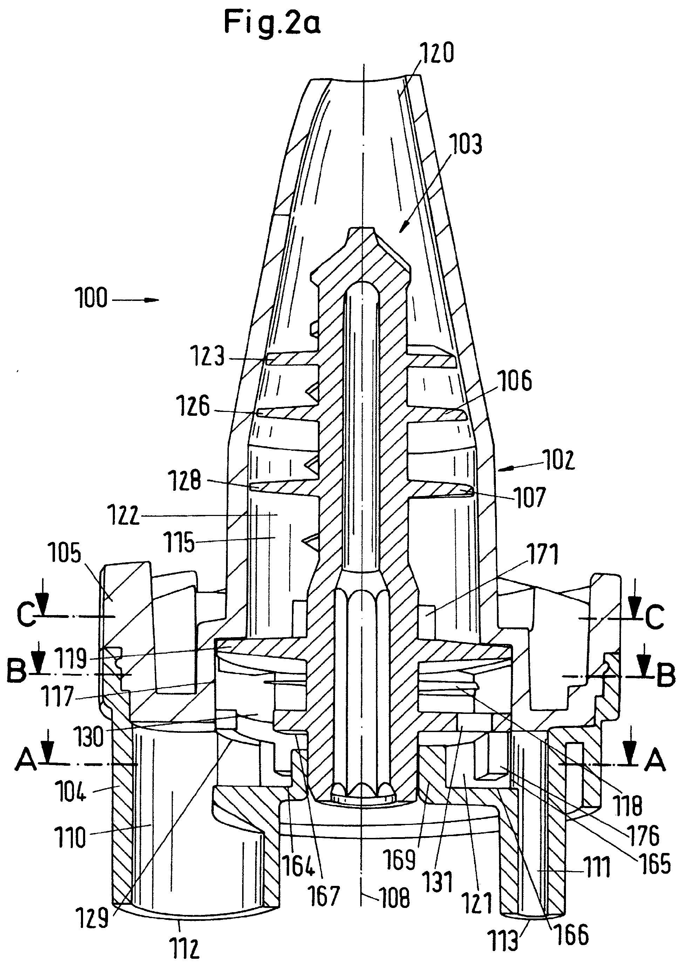

Fig. 2a zeigt einen Schnitt durch einen dynamischen Mischer gemäß einem zweiten Ausführungsbeispiel der Erfindung für die Vermischung einer Mehrzahl von fluiden Komponenten. Der dynamische Mischer 100 weist ein Gehäuse 102 und ein Rotorelement 103 auf, welches in dem Gehäuse102 drehbar um eine Rotorachse 108 angeordnet ist. In der vorliegenden Ausführungsform ist das Gehäuse 102 zweiteilig aufgebaut, es enthält einen ersten Gehäuseteil 104, in welchem sich der Zulauf der Komponenten befindet und einen zweiten Gehäuseteil 105, welcher zur Erzeugung einer Mischung aus der Mehrzahl von fluiden Komponenten dient. Der erste Gehäuseteil wird mit dem zweiten Gehäuseteil über eine Rastverbindung, Schnappverbindung oder eine Schweissverbindung verbunden, sobald das Rotorelement 103 in dem zweiten Gehäuseteil 105 aufgenommen ist. Der erste Gehäuseteil 104 weist je eine Einlassöffnung 112, 113 für zumindest je eine Komponente auf. Die Einlassöffnungen 112, 113 können unterschiedlichen Durchmesser aufweisen, der vom gewünschten Mischungsverhältnis der Komponenten abhängig ist. Die Einlassöffnungen münden in korrespondierende Einlasskanäle 110, 111, die im ersten Gehäuseteil 104 angeordnet sind. Die Einlasskanäle 110, 111 münden in die erste Vorkammer 121, die mit Austrittsöffnungen 130, 131 versehen ist, welche in die zweite Vorkammer 117 des zweiten Gehäuseteils 105 münden.

Der zweite Gehäuseteil 105 weist mindestens eine Auslassöffnung 120 auf. Durch die Auslassöffnung 120 verlässt das Gemisch der Komponenten den dynamischen Mischer. Die Hauptkammer des zweiten Gehäuseteils 105 dient zur Aufnahme des Rotorelements 103.

Die Komponenten werden von der zweiten Vorkammer 117 zu der Hauptkammer 122 geleitet. In der zweiten Vorkammer 117 kann eine weitere Vermischung erfolgen. Hierzu ist in der zweiten Vorkammer ein Mischelement 118 angeordnet. Das Mischelement 118 ist als Flügelelement ausgebildet, welches mit dem Rotorelement 103 verbunden ist. In der Hauptkammer 122 ist zwischen dem Rotorelement 103 und der Innenwand des Gehäuses ist ein ringförmiger Zwischenraum vorgesehen, in welchem ein mit dem Rotorelement 103 verbundenes Mischelement 107 angeordnet ist.

Das Mischelement 107 umfasst in der Hauptkammer 122 eine Mehrzahl von Flügelelementen 123. Die Flügelelemente 123 ragen als Vorsprünge in den Innenraum 115, welcher die Hauptkammer 122 bildet. In dieser Hauptkammer 122 erfolgt die Durchmischung der Komponenten, indem die Komponenten von den Flügelelementen erfasst und umgelagert werden. Zumindest ein Teil der Flügelelemente ist als Leitelement zur Förderung der Komponenten durch den Innenraum 115 in Richtung der Auslassöffnung 120 ausgebildet.

Es ist auch nicht erforderlich, dass benachbarte, in Bezug auf die Rotorachse 108 hintereinander angeordnete Flügelelemente von einander den gleichen Abstand aufweisen. Beispielsweise ist der Abstand des Flügelelements 123, welches nächstgelegen zur Auslassöffnung 120 angeordnet ist, zu dem Flügelelement 126 kleiner als der Abstand des Flügelelements 126 zu dem Flügelelement 128.

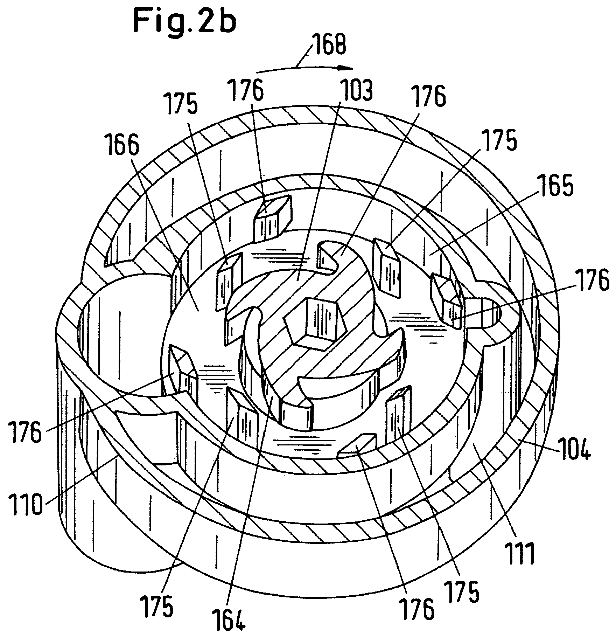

Die erste Vorkammer 121 ist in Fig. 2b in einem Schnitt durch den dynamischen Mischer im Bereich des ersten Gehäuseteils 104 sichtbar. Die Lage des Schnitts ist in Fig. 2a mit A-A angegeben. Die Schnittebene ist normal zur Rotorachse gelegt und verläuft durch die erste Vorkammer 121. Die beiden Einlasskanäle 110, 111 münden in die erste Vorkammer 121. In der ersten Vorkammer 121 sind Störelemente 175 angeordnet, welche vom Boden 166 der Vorkammer 121 in die Vorkammer hineinragen. Diese Störelemente sind ortsfest und teilen den Füllmassenstrom. Vorteilhafterweise haben sie in der Drehrichtung 169 einen zuerst kontinuierlich zunehmenden Querschnitt, der ein Maximum durchläuft und dann kontinuierlich abnimmt. Insbesondere kann der Querschnitt rautenförmig ausgebildet sein. Ähnlich wie die Störelemente 175 sind die Mitnahmeelemente 176 ausgestaltet. Sie ragen von der Drehfläche 129 in die erste Vorkammer 121 hinein. Diese Mitnahmeelemente 176 werden mit der Drehfläche 129 mitbewegt, wenn das Rotorelement 103 eine Drehbewegung ausführt. Die äusseren Mitnahmeelemente 176 streifen die Komponenten von den Austrittsöffnungen der Kanäle 110, 111 ab und führen sie in die erste Vorkammer 121. Durch diese Vorkehrungen wird ein gleichbleibendes Mischverhältnis der Komponenten erreicht. Die Mitnahmeelemente 176 und die Störelemente 175 bewirken zusammen eine Verteilung der Komponenten und eine erste Vorvermischung dieser in der Füllmasse, bevor sie über Austrittsöffnungen 130 und 131 in die zweite Vorkammer 117 gelangen. Die Austrittsöffnungen 130, 131 sind in der Drehfläche 129 angeordnet und in Fig. 2a gezeigt.

Die Decke 167 der ersten Vorkammer ist nur in Fig. 2a an der Drehfläche 129 sichtbar. Zwischen dem Boden 166 und der Decke 167 erstreckt sich die Innenwand 165, welche ein Teil des ersten Gehäuseteils 104 ist.

Die inneren Mitnahmeelemente 176 können zusammen mit der Nabe des Rotorelementes 103 und der Drehfläche 129 eine Führungsausnehmung 164 bilden. Mittels der Führungsausnehmung 164 gleitet das Rotorelement 103 auf einem Vorsprung 169 des ersten Gehäuseteils. Das Rotorelement 103 wird auch durch den Vorsprung 169 im dynamischen Mischer gehalten.

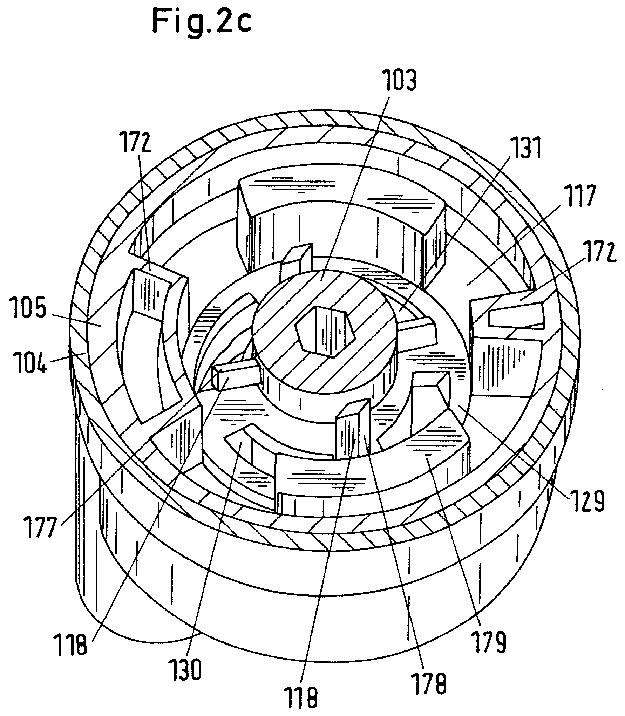

Fig. 2c zeigt einen Schnitt durch die zweite Vorkammer 117. Dieser Schnitt durch den dynamischen Mischer ist im Bereich der Verbindung zwischen dem ersten Gehäuseteil 104 und dem zweiten Gehäuseteil 105 gelegt. Die Lage des Schnitts ist in Fig. 2a mit B-B angegeben. Die Schnittebene ist normal zur Rotorachse 108 gelegt. Die Drehfläche 119 bildet die Decke der zweiten Vorkammer 117 aus. Die Drehfläche 129 bildet den Boden der zweiten Vorkammer 117 aus.

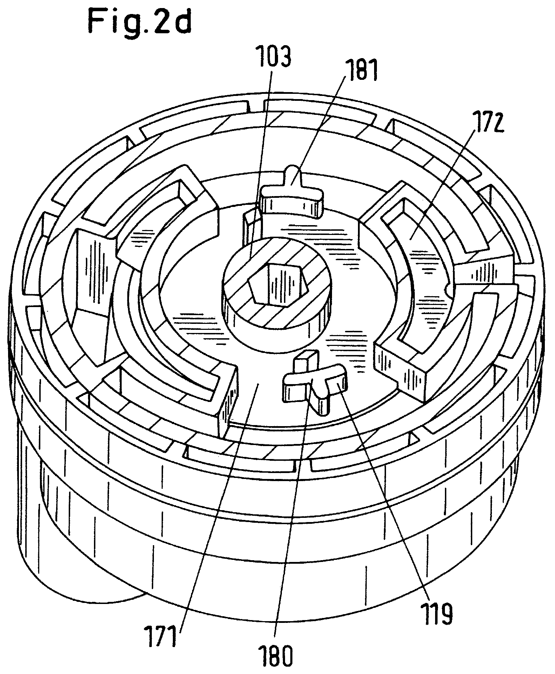

Die Füllmasse tritt gemäß Fig. 2c durch die Austrittsöffnungen 130, 131 der ersten Vorkammer 121 in die zweite Vorkammer 117 ein und verlässt die zweite Vorkammer 117 über mindestens eine Auslassöffnung 171, die in Fig. 2d sichtbar ist. In der zweiten Vorkammer 117 befindet sich eine Mehrzahl von Mischelementen 118. Die Mischelemente 118 ragen von dem Rotorelement 103 oder von der Drehfläche 129 oder der Drehfläche 119 in die zweite Vorkammer 117 hinein. Die Füllmasse wird durch Scherkräfte, welche durch die Drehfläche 119 sowie die Drehfläche 129 eingebracht werden, zumindest teilweise in eine Rotationsbewegung gedrängt.

Die Mischelemente 118 können als Flügelelemente 177, 178 ausgestaltet sein, wobei für das Flügelelement 178 die für das Mitnahmeelement 176 geltenden geometrischen Abmessungen gelten können. Durch die Flügelelemente 178 an der Drehfläche 119 werden zusammen mit den Flügelelemente 177 die Komponenten sowohl in einer Ebene parallel wie auch in einer Ebene senkrecht zur Drehachse vermischt.

Zusätzliche Zylindersegmentblöcke 179 sind als Teil des ersten Gehäuseteils 104 ausgebildet. Abgrenzungen 172 sind vorgesehen, die als Teil des zweiten Gehäuseteils 105 ausgebildet sind, um den Durchtrittsbereich von der zweiten Vorkammer 117 in die Hauptkammer 122 als Engstelle auszugestalten. Über diese Engstelle muss die Füllmasse geführt werden, so das sie nur nach Durchtritt durch die Engstelle in die Hauptkammer 122 gelangen kann, also einzuschränkend von der zweiten Vorkammer 117 zur Hauptkammer 122 kanalisiert wird.

Der Eingangsbereich der Hauptkammer 122 ist in Fig. 2d in einem Schnitt durch den dynamischen Mischer im Bereich des zweiten Gehäuseteils 105 sichtbar. Die Lage des Schnitts ist in Fig. 2a mit C-C angegeben. Die der Hauptkammer 122 zugewandte Seite der Drehfläche 119 wird teilweise von einem Deckenelement 172 des zweiten Gehäuseteils 105 überdeckt. Durch die Auslassöffnung 171 gelangt die Füllmasse in die Hauptkammer 122.

Zusätzliche Führungselemente 180 können in oder unmittelbar anschliessend an die Auslassöffnung 171 vorgesehen sein, um den Zustrom der Komponenten besser in die Hauptkammer 122 zu verteilen.

Die in axialer Richtung der einströmenden, eine pastöse Füllmasse bildenden Komponenten, werden in die Mitte, also quer zur Rotorachse 108, in eine Mischkammer umgeleitet, die vorgehend als erste Vorkammer 121 bezeichnet worden ist. Beim Einströmen in die erste Vorkammer 121 wird die Komponente mit dem kleineren Volumenstrom möglichst in den Volumenstrom der Komponente mit dem größeren Volumenstrom eingebunden, allenfalls durch am Rotorelement 103 angeordnete Flügelelemente oder Mitnahmeelemente 176 von den Austrittsöffnungen der Einlasskanäle 110, 111 abgeschert und in die erste Vorkammer 121 geleitet, wo die Füllmasse durch die Flügelelemente 60 und/oder Mitnahmeelemente 176 und/oder die Störelemente175 einer ersten Grobvermischung unterzogen wird. Die erste Vorkammer 121 wird durch ein am Rotorelement 103 befindliches Scheibenelement, welches eine Drehfläche 129 bildet, in Richtung der Auslassöffnung 120 begrenzt. Dieses Scheibenelement weist zumindest eine Öffnung auf und/oder bildet am Umfang einen Ringspalt mit dem Gehäuse aus. Die Öffnung und/oder der Ringspalt ermöglichen ein Durchströmen der Füllmasse in eine zweite Vorkammer 117. Hier können die Komponenten mit radialen und oder axialen Flügelelementen 177, 178 weiter vermengt werden. Die angebrachten Öffnungen in der zweiten Vorkammer 117 leiten die Füllmasse anschliessend in den Mischbereich der Hauptkammer 22, 122, in welchem sie radial einströmen kann. Die allenfalls speziell in dem Einströmungsbereich der

Hauptkammer 122 angebrachten axialen bogenförmige Flügelelemente 138 scheren die Füllmasse unmittelbar beim Eintritt in die Hauptkammer 122 ab und fördern die Füllmasse in Richtung der Rotorachse 108. Zumindest ein Teil der Flügelelemente 123, 126, 128, 137 weist radiale, in Richtung der Auslassöffnung 120 fördernde Leitelemente auf. Neben den dynamischen Mischerbestandteilen des Rotorelements und allenfalls vorhandenen feststehenden Leit- und/oder Störelementen kann der dynamische Mischer zusätzlich auch statische Mischerbestandteile in der Hauptkammer 122 aufweisen.

Es hat sich gezeigt, dass die Mischaufgabe in der Hauptkammer 22, 122 durch das Einbringen der zweiten Vorkammer 17, 117, in welcher eine zusätzliche Vorvermischung durch eine feinräumige Verteilung der Komponenten mit relativ kleinem Strömungswiderstand und einem kleinen Drehmoment des Rotorelements 3, 103, wesentlich verringert wird. Insgesamt kann somit die Baulänge des dynamischen Mischers nach jedem der Ausführungsbeispiele wesentlich verkürzt, der Inhalt verkleinert und die aufzuwendende Mischenergie verringert werden.

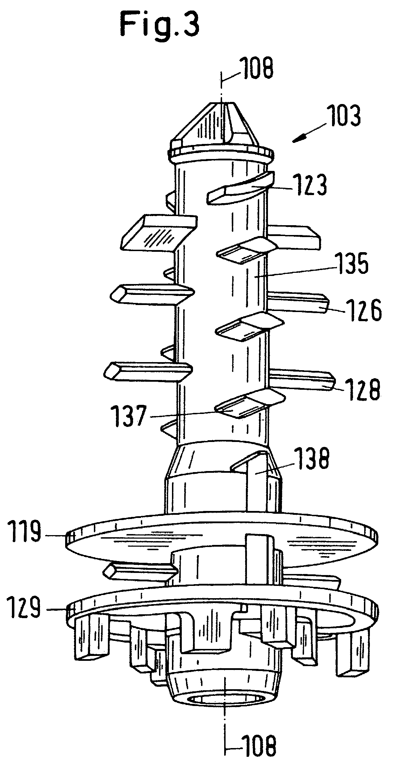

Fig. 3 zeigt eine Ansicht eines Rotorelements zum Einsatz in einen der dynamischen Mischer gemäß eines der vorhergehenden Ausführungsbeispiele. Das Rotorelement entspricht dem in Fig. 2a dargestellten Rotorelement 103, daher werden für gleiche Teile die gleichen Bezugszeichen wie in Fig. 2a verwendet. Allerdings ist diese Bezugnahme nicht als Einschränkung dahingehend zu verstehen, dass das Rotorelement nur in Zusammenhang mit dem Ausführungsbeispiel gemäß Fig. 2a verwendbar ist. Vielmehr kann das Rotorelement unter geringfügiger Anpassung der Geometrie des Gehäuses ebenfalls in einem Gehäuse gemäß eines der anderen Ausführungsbeispiele verwendet werden. Das Rotorelement 103 hat eine Rotorachse 108, entlang derer eine Rotorelementnabe 135 angeordnet ist. Die Rotorelementnabe 135 trägt eine Drehfläche 129, welche die Austrittsöffnungen 130, 131 enthält. Durch diese Austrittsöffnungen 130, 131 treten die von den Einlasskanälen 110, 111 (siehe Fig. 2a) zur ersten Vorkammer zugeführten Komponenten in die zweite Vorkammer 117 aus. Eine zweite Begrenzung der zweiten Vorkammer 117 bildet die Drehfläche 119, die stromabwärts der Drehfläche 129 auf der Rotorelementnabe 135 angebracht ist. Umfangsseitig wird die zweite Vorkammer 117 vom zweiten Gehäuseteil 105 begrenzt (siehe Fig. 2a).

Die Komponenten werden durch ein Mischelement 118, welches in der zweiten Vorkammer 117 auf der Rotorelementnabe 135 angeordnet ist, in einer Ebene senkrecht zur Rotorelementnabe und durch allfällige weitere Mischelemente, welche von der Drehfläche in die zweite Vorkammer 117 hineinragen, in einer Ebene parallel zur Rotorelementnabe 135 vorvermischt. Um in die Hauptkammer 122 (siehe Fig. 2a) zu gelangen, umfliessen die Komponenten die Drehfläche 119. Zwischen der Drehfläche 119 und der Innenwand des zweiten Gehäuseteils verbleibt ein schmaler ringförmiger Spalt, durch den die Komponenten hindurch treten. Des Weiteren sind stromabwärts der Drehfläche 119 in der Hauptkammer 22, 122 Flügelelemente 123, 126, 128 angeordnet, die als Leitelemente ausgestaltet sein können und in diesem Fall eine fördernde Wirkung auf die Füllmasse in Richtung der Auslassöffnung 20, 120 ausüben. Zusätzlich können Flügelelemente 137 vorgesehen sein, die rautenförmig ausgebildet sind, wie beispielsweise in WO98/43727 beschrieben. Des Weiteren ist ein bogenförmiges Flügelelement 138 gezeigt, welches unmittelbar an die Drehfläche 119 angrenzt und die Füllmasse von den Eintrittsöffnungen abschert und in die Hauptkammer 22, 122 leitet. Ähnliche Flügelelemente können auch weiter stromabwärts angeordnet werden, welche ein Abstreifen der Füllmasse von der Wand der Hauptkammer 22,122 bewirken.

Vorzugsweise sind gleichartige Flügelelemente gegenüberliegend zueinander auf derselben Höhe angeordnet, wobei die Höhe entlang der Rotorachse 108 gemessen wird.

Alternativ kann das Rotorelement sich nur bis zum Eingangsbereich in die Hauptkammer 22, 122, nach jedem der vorhergehenden

Ausführungsbeispiele erstrecken. In der Hauptkammer selbst kann ein statisches Mischelement angeordnet sein, was zeichnerisch nicht dargestellt ist.

## Patentansprüche

1. Dynamischer Mischer (1, 100) für eine Mehrzahl von fluiden Komponenten,
enthaltend ein Gehäuse (2, 102) und ein Rotorelement (3, 103), welches in dem Gehäuse drehbar angeordnet ist,
wobei das Gehäuse (2, 102) eine Einlassöffnung (12, 13, 112, 113) für zumindest je eine Komponente und mindestens eine Auslassöffnung (20, 120) aufweist,
wobei zwischen dem Rotorelement (3, 103) und dem Gehäuse (2, 102) ein ringförmiger Zwischenraum (15, 115) vorgesehen ist, in welchem ein mit dem Rotorelement (3, 103) verbundenes, erstes Mischelement (7, 107) angeordnet ist,
wobei das Gehäuse (2, 102) eine erste Vorkammer (21, 121), eine zweite Vorkammer (17, 117) und eine Hauptkammer (22, 122) umfasst, wobei die zweite Vorkammer (17, 117) stromabwärts der ersten Vorkammer (21, 121) angeordnet ist, so dass die erste Vorkammer (21, 121) von den Komponenten durchströmbar ist, bevor die Komponenten in die zweite Vorkammer (17, 117) eintreten,
wobei die Einlassöffnungen (12, 13, 112, 113) in korrespondierende Einlasskanäle (10, 11, 110, 111) münden, die in die erste Vorkammer (21, 121) münden,
wobei in der ersten Vorkammer (21, 121) ein zweites Mischelement (60, 176) vorgesehen ist,
wobei das zweite Mischelement (60, 176) als Mitnahmeelement oder Armelement ausgebildet ist,
wobei das Mitnahmeelement oder Armelement eine Krümmung aufweist und
wobei die Krümmung der Frontseite (61) konvex ist und die Krümmung der Rückseite (62) konkav ist.

2. Dynamischer Mischer (1, 100) nach Anspruch 1,
wobei in der zweiten Vorkammer (17, 117) ein drittes Mischelement (18, 118) vorgesehen ist.

3. Dynamischer Mischer (1, 100) nach Anspruch 2,
wobei die Komponenten in der zweiten Vorkammer (17, 117) radial vom Gehäuse (2, 102) in Richtung des Rotorelements (3, 103) geführt werden und durch gehäuseseitig oder am Rotorelement (3, 103) angebrachte dritte Mischelemente (18, 118) vorvermischt werden, bevor sie nach einer Umlenkung in axialer Richtung in die Hauptkammer (22, 122) geführt werden.

4. Dynamischer Mischer nach einem der einem der vorhergehenden Ansprüche,
wobei das erste Mischelement in der Hauptkammer (22, 122) mindestens ein Flügelelement (23, 123, 126, 128, 137) aufweist, welches als Leitelement zur Förderung der Komponenten von der Einlassöffnung (12, 13, 112, 113) zu der Auslassöffnung (20, 120) ausgebildet ist.

5. Dynamischer Mischer (1, 100) nach Anspruch 4,
wobei das mindestens eine Flügelelement (23, 123, 126, 128, 137) nicht mehr als 50% einer durch den Zwischenraum (15, 115) gelegten Ebene überdeckt, welche das Flügelelement (23, 123, 126, 128, 137) enthält und normal auf die Rotorachse (8, 108) ausgerichtet ist.

6. Dynamischer Mischer (1, 100) nach Anspruch 4 oder 5,
wobei ein erstes Flügelelement (23 126, 128, 137) vorgesehen ist und ein zweites Flügelelement (23,123, 126, 128, 137) stromabwärts des ersten Flügelelements (23, 123, 126, 128, 137, 177) angeordnet ist, wobei der kürzeste Abstand zwischen dem ersten Flügelelement (23, 33, 43, 53, 123, 126, 128, 137) und dem zweiten Flügelelement (23, 123, 126, 128, 137) mindestens ein Drittel des Abstandes zwischen dem Rotorelement (3, 103) und der durch den zweiten Gehäuseteil (5, 105) gegebenen Abgrenzung der Hauptkammer (22, 122) beträgt.

7. Dynamischer Mischer (1, 100) nach einem der vorhergehenden Ansprüche,
wobei zwischen der zweiten Vorkammer (17, 117) und der Hauptkammer (22, 122) und dem Gehäuse (2, 102) eine Auslassöffnung (71, 171) für den Durchtritt der Komponenten vorgesehen ist.

8. Dynamischer Mischer (1, 100) nach einem der vorhergehenden Ansprüche,
wobei zwischen der zweiten Vorkammer (17, 117) und der ersten Vorkammer (21, 121) eine Drehfläche (19, 129) angeordnet ist.

9. Dynamischer Mischer (1, 100) nach einem der vorhergehenden Ansprüche,
wobei das Rotorelement (3, 103) im ersten Gehäuseteil (4, 104) gelagert ist.

10. Dynamischer Mischer (1, 100) nach einem der vorhergehenden Ansprüche
wobei bei mindestens einer der Einlassöffnungen (12, 13, 112, 113) vom ersten Gehäuseteil (4) eine Vorrichtung zum Durchstechen eines die Komponenten enthaltenden Behältnisses vorgesehen ist.

11. Verwendung des dynamischen Mischers (1, 100) nach einem der vorhergehenden Ansprüche für ein Mischungsverhältnis der Komponenten 1:1 oder darunter, vorzugsweise 1:10 oder darunter besonders bevorzugt 1:50 oder darunter.

## Claims

1. A dynamic mixer (1, 100) for a plurality of fluid components,
comprising a housing (2, 102) and a rotor element (3, 103) which is rotatably arranged in the housing,
wherein the housing (2, 102) has an inlet opening (12, 13, 112, 113) for at least a respective one component and at least one outlet opening (20, 120);
wherein an annular intermediate space (15, 115) is provided between the rotor element (3, 103) and the housing (2, 102), with a first mixing element (7, 107) connected to the rotor element (3, 103) being arranged in said annular intermediate space;
wherein the housing (2, 102) comprises a first antechamber (21, 121), a second antechamber (17, 117) and a main chamber (22, 122);
wherein the second antechamber (17, 117) is arranged downstream of the first antechamber (21, 121) so that the first antechamber (21, 121) can be flowed through by the components before the components enter into the second antechamber (17, 117),
wherein the inlet openings (12, 13, 112, 113) open into corresponding inlet passages (10, 11, 110, 111) which open into the first antechamber (21, 121);
wherein a second mixing element (60, 176) is provided in the first antechamber (21, 121);
wherein the second mixing element (60, 176) is configured as an entrainer element or as an arm element;
wherein the entrainer element or arm element has a curvature; and
wherein the curvature of the front side (61) is convex and the curvature of the rear side (62) is concave.

2. A dynamic mixer (1, 100) in accordance with claim 1,
wherein a third mixing element (18, 118) is provided in the second antechamber (17, 117).

3. A dynamic mixer (1, 100) in accordance with claim 2,
wherein the components in the second antechamber (17, 117) are guided radially from the housing (2, 102) in the direction of the rotor element (3, 103) and are premixed by third mixing elements (18, 118) attached at the housing side or at the rotor element (3, 103) before they are guided into the main chamber (22, 122) after a deflection in the axial direction.

4. A dynamic mixer in accordance with any one of the preceding claims,
wherein the first mixing element (22, 122) in the main chamber has at least one vane element (23, 123, 126, 128, 137) and is configured as a guide element for conveying the components from the inlet opening (12, 13, 112, 113) to the outlet opening (20, 120).

5. A dynamic mixer (1, 100) in accordance with claim 4,
wherein the at least one vane element (23, 123, 126, 128, 137) covers no more than 50% of a plane laid through the intermediate space (15, 115), said plane including the vane element (23, 123, 126, 128, 137) and being aligned normally with respect to the rotor axle (8, 108).

6. A dynamic mixer (1, 100) in accordance with claim 4 or claim 5,
wherein a first vane element (23, 126, 128, 137) is provided and a second vane element (23, 123, 126, 128, 137) is arranged downstream of the first vane element (23, 123, 126, 128, 137, 177), with the shortest spacing between the first vane element (23, 33, 43, 53, 123, 126, 128, 137) and the second vane element (23, 123, 126, 128, 137) amounting to at least one third of the spacing between the rotor element (3, 103) and the boundary of the main chamber (22, 122) provided by the second housing part (5, 105).

7. A dynamic mixer (1, 100) in accordance with any one of the preceding claims,
wherein an outlet opening (71, 171) for the passing through of the components is provided between the second antechamber (17, 117) and the main chamber (22, 122) and the housing (2, 102).

8. A dynamic mixer (1, 100) in accordance with any one of the preceding claims,
wherein a rotary surface (19, 129) is arranged between the second antechamber (17, 117) and the first antechamber (21, 121).

9. A dynamic mixer (1, 100) in accordance with any one of the preceding claims,
wherein the rotor element (3, 103) is supported in the first housing part (4, 104).

10. A dynamic mixer (1, 100) in accordance with any one of the preceding claims,
wherein an apparatus for piercing a container containing the components is provided at at least one of the inlet openings (12, 13, 112, 113) of the first housing part (4).

11. Use of the dynamic mixer (1, 100) in accordance with any one of the preceding claims for a mixing ratio of the components of 1:1 or less, preferably 1:10 or less, particularly preferably 1:50 or less.

## Revendications

1. Mélangeur dynamique (1, 100) pour une pluralité de composants fluides,
comprenant un boîtier (2, 102) et un élément rotor (3, 103) qui est agencé en rotation dans le boîtier,
dans lequel le boîtier (2, 102) comporte une ouverture d'entrée (12, 13, 112, 113) pour au moins un composant respectif, et au moins une ouverture de sortie (20, 120),
dans lequel entre l'élément rotor (3, 103) et le boîtier (2, 102), il est prévu un espace intermédiaire de forme annulaire (15, 115) dans lequel est agencé un premier élément mélangeur (7, 107) relié à l'élément rotor (3, 103),
dans lequel le boîtier (2, 102) inclut une première chambre préliminaire (21, 121), une seconde chambre préliminaire (17, 117) et une chambre principale (22, 122),
dans lequel la seconde chambre préliminaire (17, 117) est agencée en aval de la première chambre préliminaire (21, 121), de sorte que la première chambre préliminaire (21, 121) est susceptible d'être traversée par les composants avant que les composants pénètrent dans la seconde chambre préliminaire (17, 117),
dans lequel les ouvertures d'entrée (12, 13, 112, 113) débouchent dans des canaux d'entrée (10, 11, 110, 111) correspondants, qui débouchent dans la première chambre préliminaire (21, 121),
dans lequel un second élément mélangeur (60, 176) est prévu dans la première chambre préliminaire (21, 121),
dans lequel le second élément mélangeur (60, 176) est réalisé sous forme d'élément d'entraînement ou d'éléments à bras,
dans lequel l'élément d'entraînement ou l'élément à bras présente une courbure, et
dans lequel la courbure du côté avant (61) est convexe et la courbure du côté arrière (62) et concave.

2. Mélangeur dynamique (1, 100) selon la revendication 1,
dans lequel un troisième élément mélangeur (18, 118) est prévu dans la seconde chambre préliminaire (17, 117).

3. Mélangeur dynamique (1, 100) selon la revendication 2,
dans lequel les composants sont menés dans la seconde chambre préliminaire (17, 117) radialement depuis le boîtier (2, 102) en direction de l'élément rotor (3, 103) et sont soumis à un mélange préalable au moyen de troisièmes éléments mélangeur (18, 118) montés du côté du boîtier ou sur l'élément rotor (3, 103), avant qu'ils soient menés, après une déviation, en direction axiale vers la chambre principale (22, 122).

4. Mélangeur dynamique selon l'une des revendications précédentes,
dans lequel le premier élément mélangeur dans la chambre principale (22, 122) comprend au moins un élément en forme d'aile (23, 123, 126, 128, 137), lequel est réalisé sous forme d'élément de guidage pour le convoyage des composants depuis l'ouverture d'entrée (12, 13, 112, 113) vers l'ouverture de sortie (20, 120).

5. Mélangeur dynamique (1, 100) selon la revendication 4,
dans lequel ledit au moins un élément en forme d'aile (23, 123, 126, 128, 137) ne recouvre pas plus de 50 % d'un plan passant à travers l'espace intermédiaire (15, 115), qui contient l'élément en forme d'aile (23, 123, 126, 128, 137) et qui est orienté perpendiculairement à l'axe du rotor (8, 108).

6. Mélangeur dynamique (1, 100) selon la revendication 4 ou 5,
dans lequel il est prévu un premier élément en forme d'aile (23, 126, 128, 137) et un second élément en forme d'aile (23, 123, 126, 128, 137) en aval du premier élément en forme d'aile (23, 123, 126, 128, 137, 177), dans lequel la distance la plus courte entre le premier élément en forme d'aile (23, 33, 43, 53, 123, 126, 128, 137) et le second élément en forme d'aile (23, 123, 126, 128, 137) s'élève au moins à un tiers de la distance entre l'élément rotor (3, 103) et la délimitation de la chambre principale (22, 122) définie par la seconde partie de boîtier (5, 105).

7. Mélangeur dynamique (1, 100) selon l'une des revendications précédentes,
dans lequel une ouverture de sortie (71, 171) est prévue entre la seconde chambre préliminaire (17, 117) et la chambre principale (22, 122) et le boîtier (2, 102), pour la traversée des composants.

8. Mélangeur dynamique (1, 100) selon l'une des revendications précédentes,
dans lequel une surface de rotation (19, 129) est agencée entre la seconde chambre préliminaire (17, 117) et la première chambre préliminaire (21, 121).

9. Mélangeur dynamique (1, 100) selon l'une des revendications précédentes,
dans lequel l'élément rotor (3, 103) est monté dans la première partie de boîtier (4, 104).

10. Mélangeur dynamique (1, 100) selon l'une des revendications précédentes,
dans lequel un dispositif destiné à perforer un récipient contenant les composants est prévu à l'une au moins des ouvertures d'entrée (12, 13, 112, 113) de la première partie de boîtier (4).

11. Utilisation du mélangeur dynamique (1, 100) selon l'une des revendications précédentes, pour un rapport de mélange des composants de 1:1 ou moins, de préférence 1:10 ou moins, et de manière particulièrement préférée 1:50 ou moins.
